# EUROPÄISCHE PATENTSCHRIFT

(11) **EP 3 818 001 B1**
(45) Veröffentlichungstag und Bekanntmachung des Hinweises auf die Patenterteilung: **07.09.2022**
(21) Anmeldenummer: 19735555.5
(22) Anmeldetag: 02.07.2019
(51) Int. Cl.: B65G 47/61, B65G 47/88, B65G 9/00, B65G 47/29

(54) **BÜGEL-BELADESTATION FÜR HÄNGEFÖRDERER**
BRACKET LOADING STATION FOR OVERHEAD CONVEYORS
STATION DE CHARGEMENT DE CINTRE POUR CONVOYEUR SUSPENDU

(30) Priorität: 06.07.2018 DE 102018116420
(43) Veröffentlichungstag der Anmeldung: 12.05.2021
(73) Patentinhaber: SSI Schäfer Automation GmbH (AT), 8051 Graz (AT)
(72) Erfinder: HABERL, Gerald, 8700 Leoben (AT)
(74) Vertreter: Witte, Weller & Partner Patentanwälte mbB
(86) Internationale Anmeldenummer: PCT/EP2019/067756
(87) Internationale Veröffentlichungsnummer: WO 2020/007870

(56) Entgegenhaltungen:
- DE-A1- 3 902 712
- DE-C1- 3 819 102
- DE-C1- 4 326 095
- GB-A- 2 023 524
- JP-A- H1 149 324
- JP-A- 2002 085 899
- US-A- 4 027 759
- US-A- 4 856 144
- US-A- 5 193 686

## Beschreibung

Die vorliegende Erfindung betrifft eine Beladestation zum automatisierten Beladen eines primären Ladungsträgers (z.B. Rolladapters) eines Hängeförderers mit einem sekundären Ladungsträger (z.B. Kleiderbügel) für Hängeware, wie z.B. Kleidungsstücke. Ferner betrifft die vorliegende Erfindung einen entsprechenden Hängeförderer inklusive einer entsprechenden Beladestation.

Die Erfindung kommt insbesondere in der Modeindustrie zum Einsatz, wo Kleidungsstücke (innerbetrieblich) mit Hängeförderern auf (Kleider-)Bügeln hängend gelagert und transportiert werden. Die Kleidungsstücke werden in diesem Zusammenhang auch als Hängeware bezeichnet. Der Transport der Hängeware, d.h. der Kleider auf den Bügeln, erfolgt mit den Hängeförderern.

Es gibt unterschiedliche Typen von Hängeförderern. Bei einem ersten Typ werden die Kleiderbügel auf einer Gleitschiene von Mitnehmern geschoben. Die Mitnehmer sind separat oberhalb der Gleitschiene angeordnet und an eine Antriebskette gekoppelt, die in einer weiteren, separaten Führungsschiene oberhalb der Gleitschiene angeordnet ist. Bei einem zweiten Typ werden sogenannte Rolladapter eingesetzt, die rollend auf der Transportschiene sitzen und die einen Körper aufweisen, der durch einen Schlitz in der Transportschiene hindurchreicht, so dass ein Teil des Rolladapters nach unten aus der Transportschiene vorsteht. Dieser vorstehende untere Abschnitt des Rolladapters weist eine Transportöffnung auf, in die z.B. Kleiderbügel oder Transporttaschen eingehängt werden können. Die Rolladapter werden durch eine Antriebskette bewegt, die frei an die Rolladapter koppelt. Vorzugsweise sind beim zweiten Typ die Rolladapter und die Antriebskette innerhalb der gleichen Schiene (d.h. innerhalb der Transportschiene) angeordnet. In diesem Fall spricht man auch von innenlaufenden Rolladaptern, deren Transportöffnung jedoch aus der Schiene -vertikal nach unten - herausragt, wie es nachfolgend noch näher erläutert werden wird. Die Erfindung betrifft den zweiten Typ von Hängeförderern.

Bekannte Rolladapter und Hängeförderer sind z.B. in den Dokumenten DE 297 09 545 U1, DE 297 09 547 U1 und EP 1 462 393 B1 beschrieben.

Das Dokument DE 39 02 712 A1 offenbart gemäß seiner Zusammenfassung ein Verfahren und eine Vorrichtung zum Zusammenstellen von Gruppen von Kleidungsstücken verschiedener Arten und / oder Mengen auf Fördermitteln, die jeweils unterschiedlichen Zielen zugeordnet sind. Bei bekannten Verfahren und bekannten Vorrichtungen wird jede einzelne Gruppe für ein Ziel nicht vervollständigt, bis die nächste Gruppe aufgenommen ist. Auf diese Weise müssen die Kleidungsstücke aus einem Lager heraus und wieder hinein bewegt werden. Um den Arbeitsablauf zu beschleunigen und Fehlerquellen zu vermeiden, wird vorgeschlagen, die den jeweiligen Zielen zugewiesenen Fördermittel in einem geschlossenen Pfad in einer Förderzone rotieren zu lassen und eine Übergabestation in diesem Pfad anzuordnen. Somit können alle Kleidungsstücke eines einzelnen Typs zuerst an alle, den spezifischen Zielen zugewiesenen Fördermittel verteilt werden, bevor der nächste Satz aufgenommen wird. Dies eignet sich insbesondere im Großhandel für die Distribution von Kleidungsstücken an einzelne Filialen. Das Dokument DE 39 02 712 A offenbart eine Beladestation zum Beladen eines primären Ladungsträgers eines Hängeförderers mit einem sekundären Ladungsträger für Hängeware, wobei der, während eines Transports im Wesentlichen vertikal orientierte, primäre Ladungsträger mittels eines Paars von Laufrollen an einer Transportschiene des Hängeförderers geführt beweglich gelagert ist. Die Beladestation weist eine Staustrecke, die eingerichtet ist, eine Vielzahl der primären Ladungsträger, die in einer Förderrichtung entlang der Staustrecke bewegbar sind, entlang der Förderrichtung hintereinander zu staue, eine Vereinzelungseinrichtung die seitlich zur Staustrecke angeordnet ist, und die erste und zweite Stoppelemente aufweist, wobei die ersten und zweiten Stoppelemente jeweils quer zur Staustrecke so beweglich gelagert sind, dass jedes der Stoppelemente, wenn es sich in einer Stoppposition befindet, in einen Förderweg der primären Ladungsträger hinein bewegt ist, um die primären Ladungsträger zu stauen, und, wenn es sich in einer Freigabeposition befindet, aus dem Förderweg heraus bewegt ist, um eine Bewegung der primären Ladungsträger in der Förderrichtung zuzulassen; eine Steuereinheit; und eine Zuführeinrichtung, die seitlich zur Staustrecke angeordnet ist auf.

Das Dokument JP H11 49324 A betrifft gemäß seinem Titel eine Kettenhaken-Haltestruktur für Träger von Hängewaren.

Das Dokument GB 2 023 524 A betrifft gemäß seinem Titel ein Transfer- und Lagersystem für Werkstücke.

Das Dokument US 5 193 686 A betrifft gemäß seinem Titel ein Vorrichtung zum Beladen von Artikeln.Das Dokument US 4 856 144 A betrifft gemäß seinem Titel ein Verfahren und eine Vorrichtung zum Transportieren von Schlachtvieh während einer Schlachtung, zum Verpacken oder zur anderweitigen Verarbeitung von Tieren, insbesondere von Geflügel.

Das Dokument DE 43 26 095 C1 betrifft gemäß seinem Titel eine Aufgabevorrichtung an einem Hängeförderer.

Das Dokument DE 38 19 102 C1 betrifft gemäß seinem Titel eine Vorrichtung zum Beladen eines Förderwagens für Tragbügel.

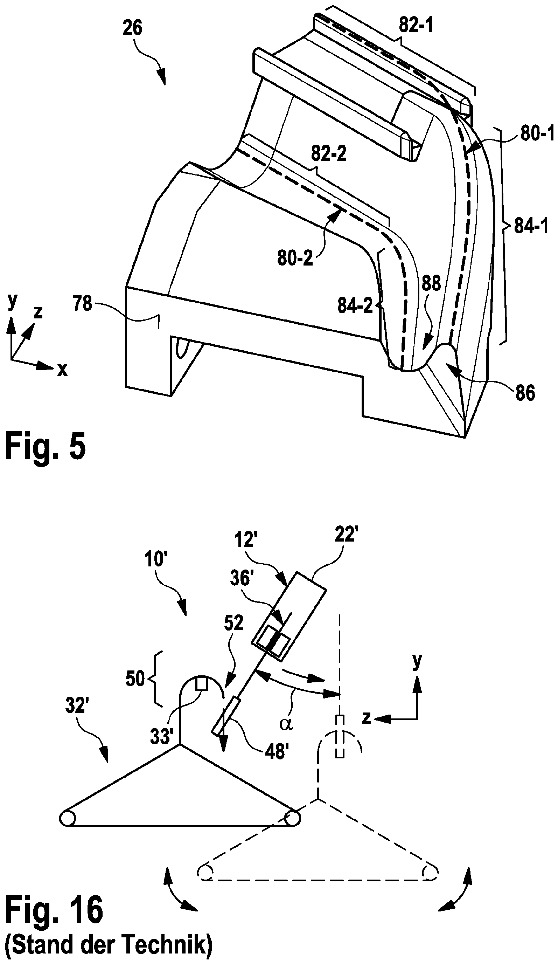

Um die Rolladapter mit den Kleiderbügeln zu beladen, ist eine Beladestation bekannt, wie sie schematisch in Fig. 16 gezeigt ist.

In Fig. 16 blickt man entlang einer Förderrichtung, d.h. die Förderrichtung verläuft senkrecht zur Zeichnungsebene, auf die vorbekannte Beladestation 10', die eine schräggestellte Staustrecke 12' umfasst, die in der Fig. 16 durch ein Hohlprofil (Transportschiene 22') implementiert ist. Die Staustrecke 12' ist gegenüber der vertikalen Richtung Y mit einem Winkel α geneigt, um eine Fläche der Transportöffnung 48' des Rolladapters 36' in der horizontalen XZ-Ebene möglichst groß zu machen. Je größer die Fläche der Transportöffnung 48' ist, desto einfacher ist es, den Kleiderbügel 32', der über eine Schiene 33' zugeführt wird, die in der Längsrichtung X parallel zur Förderrichtung orientiert ist, senkrecht (d.h. parallel zur Richtung Y) in die Transportöffnung 48' fallen zu lassen, wie es durch einen Pfeil angedeutet ist. Danach wird der so beladene Rolladapter 36' durch eine nicht dargestellte Drehvorrichtung aktiv, d.h. angetrieben, aus der schrägen Stellung in die vertikale normale Transportstellung (vgl. Rolladapter 36' und Bügel 32' in Strichlinie dargestellt), wie es durch einen weiteren Pfeil dargestellt ist.

Die durch eine aktive Drehbewegung induzierte Rückbewegung des schräg orientierten Rolladapters 36' in seine im Wesentlichen vertikal orientierte Normal- bzw. Transportstellung führt dazu, dass der Kleiderbügel 32' zu schaukeln beginnt, wie es wiederum durch Pfeile angedeutet ist. Wenn der Kleiderbügel 32' schwingt, schwingen auch die daran aufgehängten (nicht dargestellten) Kleidungsstücke. Das Kleidungsstück bewegt sich unkontrolliert. Dies ist in der Modeindustrie nicht gewünscht.

Ferner kann es vorkommen, dass der Kleiderbügel 32' aufgrund der Schwingung aus der Transportöffnung 48' herausfällt. Auch dies ist nicht erwünscht.

Schließlich werden die Rolladapter 36' selbst durch die Schwingung der Kleidungsstücke und/oder der Kleiderbügel 32' unnötig belastet. Dies resultiert in einen erhöhten Verschleiß der Rolladapter 36'.

Ferner werden viele mechanische Komponenten benötigt. Die Rolladapter 36' werden üblicherweise in der vertikalen Ausrichtung durch die (nicht dargestellte) Hängeförderanlage transportiert. Das Auslenken in die schräge Stellung (durchgezogene Linie in Fig. 16) erfordert ein Auskoppeln aus einer Hauptförderstrecke. Dies kostet Zeit. Das Gleiche gilt für die Rückführung aus der ausgelenkten Stellung in die normale vertikale Transportstellung (Strichlinie in Fig. 16).

Es ist daher eine Aufgabe der vorliegenden Erfindung, die oben beschriebenen Nachteile beim automatisierten Beladen von Kleiderbügeln in primäre Ladungsträger eines Hängeförderers zu überwinden.

Diese Aufgabe wird gelöst durch eine Beladestation zum automatisierten Beladen eines primären Ladungsträgers, insbesondere eines Rolladapters, eines Hängeförderers mit einem sekundären Ladungsträger, insbesondere einem Kleiderbügel, für Hängeware, insbesondere Kleidungsstücke, wobei der während eines Transports im Wesentlichen vertikal orientiere, primäre Ladungsträger mittels eines Paars von Laufrollen innerhalb einer Transportschiene des Hängeförderers geführt beweglich gelagert ist, wobei die Beladestation aufweist: eine Staustrecke, die vorzugsweise als Stauförderer implementiert ist, wobei die Staustrecke eingerichtet ist, primäre Ladungsträger, die in einer Förderrichtung entlang der Staustrecke bewegbar sind, in der Förderrichtung hintereinander aufzustauen; eine Vereinzelungseinrichtung, die seitlich zur Staustrecke angeordnet ist und die aufweist: erste und zweite, insbesondere fingerförmige, Stoppelemente, wobei die ersten und zweiten Stoppelemente jeweils (horizontal) quer zur Staustrecke so beweglich gelagert sind, dass jedes der Stoppelemente, wenn es sich in seiner Stoppposition befindet, in einen Förderweg der primären Ladungsträger, insbesondere zwischen zwei der aufgestauten Ladungsträger, hineinbewegt ist, um die primären Ladungsträger aufzustauen, und, wenn es sich in seiner Freigabeposition befindet, aus dem Förderweg herausbewegt ist, um eine Bewegung der primären Ladungsträger in der Förderrichtung zuzulassen; und einen Schalter; eine Steuereinheit; eine Zuführeinrichtung, die (horizontal) seitlich zur Staustrecke angeordnet ist und die eingerichtet ist, einen bügelförmigen Kopfabschnitt des sekundären Ladungsträgers durch eine Transportöffnung im primären Ladungsträger zu führen, um den primären Ladungsträger zu beladen, wenn sich der primäre Ladungsträger in einer Beladeposition befindet, die einer ersten Stauposition, die insbesondere einem stromabwärts gelegenen Ende der Staustrecke entspricht, die durch die Stoppposition des ersten Stoppelements definiert ist; wobei der Schalter gegenüberliegend zur Zuführeinrichtung angeordnet ist, so dass sich der primäre Ladungsträger in der Beladeposition (horizontal) zwischen dem Schalter und der Zuführeinrichtung, insbesondere einer Rutsche der Zuführeinrichtung, befindet, wobei der Schalter durch den sekundären Ladungsträger aus einer Normalstellung in eine Vereinzelungsstellung bewegt wird, sobald der sekundäre Ladungsträger durch die Transportöffnung im primären Ladungsträger hindurchgetreten ist, und ein Vereinzelungssignal an die Steuereinheit sendet; und wobei die Steuereinheit, wenn die Steuereinheit das Vereinzelungssignal empfängt, veranlasst, dass, vorzugsweise nur, der beladene primäre Ladungsträger die Staustrecke in Richtung einer Hauptförderstrecke des Hängeförderers bzw. die Beladeposition verlässt.

Die Beladestation ist so ausgebildet, dass die primären Ladungsträger (vorzugsweise Rolladapter) in ihrer Normalstellung, d.h. in einer vertikal orientierten Stellung, mit den sekundären Ladungsträgern (Kleiderbügeln) beladen werden können. Dies bedeutet, dass die Rolladapter nicht gegenüber der Vertikalen ausgelenkt werden, um beladen zu werden. Die Belastung der Rolladapter wird dadurch minimiert.

Es wird Zeit gewonnen, weil die Rolladapter nicht aus einer ausgelenkten Stellung in die vertikale Normalstellung (aktiv) zurückgedreht werden müssen. So lässt sich eine Beladeleistung von z.B. bis zu 7.000 Bügeln pro Stunde erreichen, was bereits experimentell durch die Anmelderin nachgewiesen wurde. Höhere Leistungen von bis zu 10.000 Bügeln pro Stunde sind möglich, was aktuell untersucht wird.

Die sekundären Ladungsträger bzw. Bügel werden kontrolliert zugeführt. Dies bedeutet insbesondere, dass die Kleidungsstücke, die an den entsprechenden Bügeln hängen, während der Beladung nicht ins Schwingen kommen. Dadurch ist es ausgeschlossen, dass die Kleidungsstücke während der Beladung von den Bügeln herunterfallen. Eine gewünschte Ausrichtung der Kleidungsstücke auf dem Bügel bleibt erhalten. Eine Kollision von Kleidungsstücken untereinander wird vermieden. Eine Blockade bzw. ein Verhaken der Kleidungsstücke während des Beladungsvorgangs wird vermieden.

Da die Bügel bzw. Kleidungsstücke nicht schwingen, wird der primäre Ladungsträger bzw. Rolladapter während der Beladung weniger stark belastet. Die Lebensdauer der primären Ladungsträger erhöht sich, weil der Verschleiß verringert wird.

Ein Abtransport der primären Ladungsträger aus der Beladeposition in Richtung einer Hauptförderstrecke des Hängeförderers kann schneller erfolgen, weil die Rotationsbewegung zum Verbringen der primären Ladungsträger in ihre Normalstellung entfällt. Die primären Ladungsträger können direkt aus ihrer Beladeposition heraus bewegt, insbesondere beschleunigt, werden.

Die Prozesssicherheit ist sehr hoch. Dies bedeutet, dass 100 % der Bügel sicher in ihren Rolladapter eingeführt werden, ohne herunterzufallen.

Insgesamt kommt die Beladestation mit weniger mechanischen Komponenten als eine herkömmliche Beladestation aus. Die Beladestation baut kompakter. Die Beladestation baut kürzer. Die Investitionskosten sind aufgrund der reduzierten Anzahl von Komponenten geringer. Die Drehkomponente fehlt.

Die primären Ladungsträger bzw. Rolladapter müssen nicht ausgeschleust werden, um schräggestellt zu werden. Dies bedeutet mit anderen Worten, dass die Staustrecke in den Hauptförderer integriert werden kann. Die Staustrecke ist dann ein Abschnitt des Hauptförderers.

Vorzugsweise ist der primäre Ladungsträger in der Beladeposition und entlang der Staustrecke im Wesentlichen vertikal orientiert.

Damit lassen sich die oben erwähnten Vorteile erzielen, nämlich auf die Rückführbewegung verzichten zu können und den primären Ladungsträger direkt aus der Beladeposition heraus bewegen zu können.

Insbesondere weist die Zuführeinrichtung eine Rutsche auf, die eine schiefe Ebene definiert, die in Richtung der Beladeposition abfällt und entlang welcher der sekundäre Ladungsträger, vorzugsweise durch Schwerkraft, in die Transportöffnung des primären Ladungsträgers gleitet, der sich in der Beladeposition befindet.

Mit der Rutsche lassen sich die sekundären Ladungsträger passiv, d.h. ohne aktiven Antrieb, in die Transportöffnung des primären Ladungsträgers einführen. Die Bewegung erfolgt durch Gleiten, hervorgerufen durch Schwerkraft. Das Einführen ist prozesssicher, d.h. die Bügel werden immer sicher in die Transportöffnung eingeführt und fallen nicht daneben.

Bei einer weiteren Ausgestaltung weist ein vertikal orientierter Querschnitt der Rutsche einen erhabenen Abschnitt, auf dem ein Scheitelpunkt des bügelförmigen Kopfabschnitts in Richtung der Beladeposition gleitet, und einen angrenzenden, vertieften Abschnitt auf, der eingerichtet ist, eine Spitze des bügelförmigen Abschnitts in Richtung der Beladeposition zu führen.

Der Scheitelpunkt des Bügelkopfes gleitet nahezu permanent auf dem erhabenen Abschnitt (Grat) in Richtung der Beladeposition. Der vertiefte Abschnitt (Rinne) dient der Führung der Spitze des Bügelkopfes. Die Bügelköpfe können prinzipiell unterschiedlich ausgestaltet sein. Dies äußert sich insbesondere in einer unterschiedlichen Position der Bügelkopfspitze. Bei längeren Bügelköpfen ist die Spitze tiefer angeordnet als bei kürzeren Bügelköpfen. Bei den längeren Bügelköpfen führt der vertiefte Abschnitt die Spitze durch Kontakt sicher in die Transportöffnung. In diesem Fall gibt es zwei Kontaktpunkte zwischen der Rutsche und dem Bügelkopf, nämlich zum einen zwischen der Rutsche (Grat) und dem Bügelkopfscheitelpunkt und zum anderen zwischen der Rutsche (Rinne) und der Spitze.

Vorzugsweise definieren der erhabene Abschnitt und der vertiefte Abschnitt in einer Draufsicht auf die Rutsche parabelförmige Führungsbahnabschnitte, die von geradlinigen parallelen Führungsbahnabschnitten startend in die Beladeposition münden, und wobei vorzugsweise der parabelförmige Führungsbahnabschnitt des erhabenen Abschnitts eine größere Steigung als der parabelförmige Führungsbahnabschnitt des vertieften Abschnitts aufweist.

Dies bedeutet, dass die Rutsche in ihrem stromabwärtigen Endbereich parabelförmige Führungsbahnen aufweist, um den Scheitelpunkt und/oder die Spitze des Bügelkopfes sicher in die Transportöffnung des primären Ladungsträgers in der Beladeposition zu führen.

Die Zuführung der sekundären Ladungsträger kann anfangs nahezu parallel zur Staustrecke erfolgen. Es ist nicht zwingend erforderlich, senkrecht zur Staustrecke zuzuführen.

Die unterschiedlichen Steigungen der parabelförmigen Führungsbahnabschnitte bewirken, dass der Bügelkopf während der finalen Zuführung so gedreht wird, dass die Spitze nahezu senkrecht durch eine Ebene hindurchtritt, die durch die Transportöffnung des primären Ladungsträgers definiert ist. Vorzugsweise wird die Ebene, in der der Bügelkopf liegt, während der Beladung über die Senkrechte hinaus gedreht. Dies bedeutet, dass die Spitze des Bügelkopfes stromaufwärts zur Förderrichtung orientiert ist und ein gegenüberliegender Teil des Bügelkopfes stromabwärts orientiert ist. Dies ist von Vorteil, weil der primäre Ladungsträger in der Förderrichtung aus der Beladeposition heraus beschleunigt wird, so dass sich das Kleidungsstück bzw. der Bügel beim Beschleunigen "gerade" stellt. Dies bedeutet wiederum, dass eine Hängeebene des Kleidungsstücks im Wesentlichen senkrecht zur Förderrichtung orientiert ist, wie es gewünscht ist.

Bei einer weiteren besonderen Ausgestaltung erfolgt der Schritt, bei dem die Steuereinheit veranlasst, dass (nur) der primäre Ladungsträger die Staustrecke in Richtung der Hauptförderstrecke verlässt, indem das erste Stoppelement aus der Stoppposition in die Freigabeposition bewegt wird, während das zweite Stoppelement aus der Freigabeposition in die Stoppposition bewegt wird, so dass der primäre Ladungsträger die Staustrecke verlässt, während alle anderen primären Ladungsträger, die sich stromaufwärts zur Beladeposition befinden, durch das zweite Stoppelement aufgehalten bzw. aufgestaut werden.

Die ersten und zweiten Stoppelemente werden so betätigt, dass nur der primäre Ladungsträger in der Beladeposition zum Abtransport freigegeben wird, während alle anderen primären Ladungsträger (aufgrund eines Staudrucks) weiterhin aufgestaut werden. Dies ist insbesondere von Vorteil, wenn die anderen Ladungsträger einem hohen Staudruck ausgesetzt sind. Der hohe Staudruck stellt sicher, dass die anderen primären Ladungsträger mit hoher Geschwindigkeit nachgeführt werden, insbesondere in die Beladeposition, sobald der beladene primäre Ladungsträger das stromabwärtige Ende des Stauförderers, also die Beladeposition, verlassen hat.

Auch diese Maßnahmen erhöhen die Prozesssicherheit. Außerdem stellen sie sicher, dass eine hohe Beladeleistung erzielbar ist, weil die leeren primären Ladungsträger schnell und sicher nachgeführt werden.

Bei einer anderen besonderen Konfiguration weist die Vereinzelungseinrichtung ferner einen (horizontal) umlaufenden, in sich geschlossenen Förderstrang, wie z.B. einen Riemen, auf, der mindestens einen nach außen vorstehenden Mitnehmer aufweist, wobei der Förderstrang so angeordnet ist, dass der mindestens eine Mitnehmer von den aufgestauten primären Ladungsträgern nur den primären Ladungsträger in der Beladeposition berührt und anschließend parallel zur Förderrichtung anschiebt.

Die Vereinzelungseinrichtung sorgt also dafür, dass der beladene primäre Ladungsträger aus seiner Beladeposition heraus beschleunigt wird, um später in die Hauptstrecke eingeschleust zu werden. Der Förderstrang ist so angeordnet (und ausgebildet), dass nur der beladene Ladungsträger beschleunigt wird. Der Mitnehmer berührt nur den beladenen primären Ladungsträger. Alle anderen leeren primären Ladungsträger werden nicht berührt, so dass Kollisionen und Blockaden verhindert werden.

Vorzugsweise wird der Förderstrang getaktet bewegt, wenn der Förderstrang mehrere Mitnehmer aufweist, wobei die Mitnehmer entlang des Förderstrangs gleich beabstandet angeordnet sind und wobei ein Takt durch den Abstand zwischen benachbarten Mitnehmern definiert ist.

Insbesondere ist ein relativer (lichter) Abstand des ersten und zweiten Stoppelements entlang der Förderrichtung kleiner als ein Abstand zwischen zwei aufgestauten primären Ladungsträgern.

Auf diese Weise wird sichergestellt, dass nur der beladene primäre Ladungsträger vereinzelt wird, während alle anderen leeren primären Ladungsträger sicher aufgehalten werden.

Bei einer vorteilhaften Konfiguration ist der Schalter ein Kontaktschalter oder eine Schaltwippe, der bzw. die nach einer Auslenkung durch den sekundären Ladungsträger und einem Abtransport des beladenen primären Ladungsträgers selbsttätig in die Normalposition zurückkehrt.

Somit ist die Beladestation für einen neuen Beladevorgang bereit.

Der Schalter stellt ein binäres System dar (primäre Ladungsträger beladen oder nicht beladen), so dass die Prozesssicherheit hoch ist.

Des Weiteren wird die obige Aufgabe durch einen Hängeförderer bzw. ein Hängefördersystem mit einer Beladestation gelöst, die wie oben beschrieben ausgestaltet ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: eine schematische Veranschaulichung einer Beladestation, die Teil eines (nicht dargestellten) Hängeförderers ist;
- Figur 2: eine perspektivische Ansicht eines isoliert dargestellten primären Ladungsträgers, der als Rolladapter implementiert ist;
- Figur 3: eine schematische Seitenansicht einer Transportschiene, wobei man in ein Inneres der Schiene blickt, um den primären Ladungsträger der Fig. 2 zu sehen;
- Figur 4: eine aufgebrochene perspektivische Teilansicht der Beladestation der Fig. 1;
- Figur 5: eine perspektivische schematische Ansicht einer Rutsche einer Zuführeinrichtung der Beladestation der Fig. 1;
- Figur 6: eine perspektivische Veranschaulichung eines ersten Zustandes einer Beladesequenz;
- Figur 7: eine Veranschaulichung eines zweiten Zustands der Beladesequenz;
- Figur 8: eine Veranschaulichung eines dritten Zustands der Beladesequenz;
- Figur 9: eine Veranschaulichung eines vierten Zustands der Beladesequenz;
- Figur 10: einen ersten Zustand einer Vereinzelungssequenz;
- Figur 11: einen zweiten Zustand einer Vereinzelungssequenz;
- Figur 12: einen dritten Zustand einer Vereinzelungssequenz;
- Figur 13: einen vierten Zustand einer Vereinzelungssequenz;
- Figur 14: einen fünften Zustand einer Vereinzelungssequenz;
- Figur 15: einen sechsten Zustand einer Vereinzelungssequenz; und
- Figur 16: eine Beladestation gemäß dem Stand der Technik.

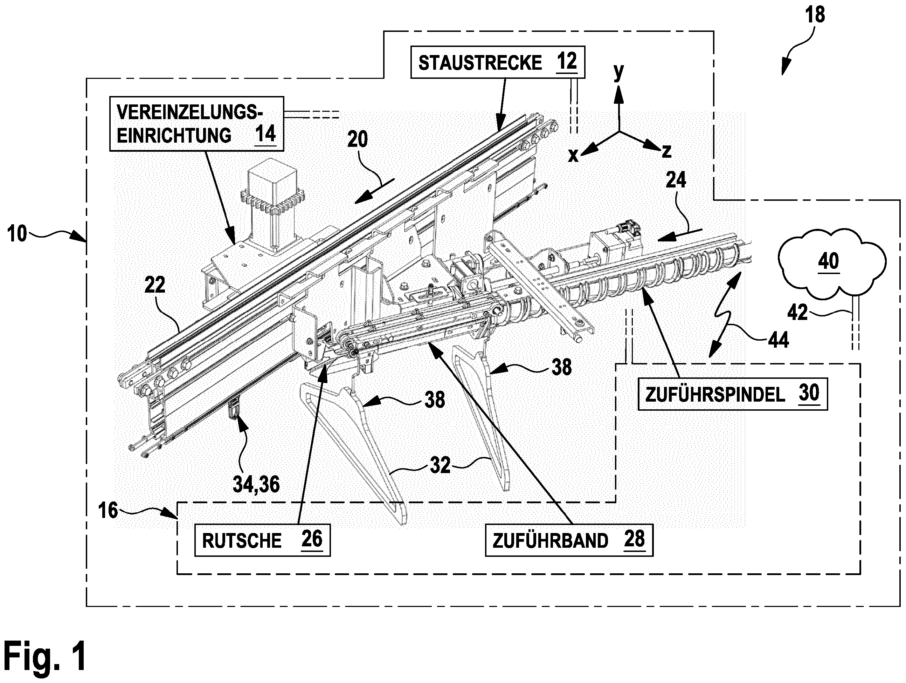

Fig. 1 zeigt eine perspektivische Veranschaulichung einer Beladestation 10, die eine Staustrecke 12, eine Vereinzelungseinrichtung 14 und eine Zuführeinrichtung 16 aufweist. Die Staustrecke 12, die Vereinzelungseinrichtung 14 und die Zuführeinrichtung 16 treffen sich in einem Materialflusspunkt, wie es unten noch näher ausgeführt wird. Die Beladestation 10 ist Teil eines hier nicht näher dargestellten Hängeförderers 18, der z.B. stromaufwärts an die Staustrecke 12 und stromabwärts an Vereinzelungseinrichtung 14 gekoppelt ist. Die Beladestation 10 ist in diesem Fall direkt in einen Streckenverlauf des Hängeförderers 18 integriert. Alternativ kann die Beladestation 10 auch maschen- oder schleifenförmig an den Hängeförderer 18 koppeln.

Die Staustrecke 12 kann passiv oder aktiv ausgebildet sein.

In der passiven Ausführung ist kein Antrieb vorgesehen. Die Staustrecke 12 ist in diesem Fall z.B. durch eine geneigte Schiene implementiert, die die Schwerkraft zum Transport nutzt.

In der aktiven Variante ist ein Antrieb vorgesehen, um primäre Ladungsträger 34 angetrieben entlang der Staustrecke 12 zu bewegen. In diesem Fall ist die Staustrecke 12 ein Stauförderer. Ein exemplarischer Stauförderer ist in der WO 2017/109042A1 gezeigt, auf die hier Bezug genommen wird.

In der Fig. 1 ist exemplarisch ein kartesisches Koordinatensystem XYZ gezeigt. Die Staustrecke 12 erstreckt sich exemplarisch parallel zur Längsrichtung X und definiert damit auch die Förderrichtung 20, da sich eine (Transport-)Schiene 22 der Staustrecke 12 (und des Hängeförderers 18) parallel zur Längsrichtung X erstreckt.

Die Zuführeinrichtung 16 kann (horizontal) schräg zur Längsrichtung X angeordnet sein, so dass eine Zuführeinrichtung 24 und die Förderrichtung 20 exemplarisch einen Winkel 30° bis 40° zueinander definieren. Es versteht sich, dass jeder andere beliebige Winkel, vorzugsweise bis 90°, wählbar ist. Ferner versteht es sich, dass die Beladestation 10, die in Fig. 1 im Wesentlichen horizontal, d.h. in der XZ-Ebene, liegt, (zusätzlich) auch gegenüber der Horizontalen geneigt angeordnet sein kann.

Die Staustrecke 12, die Vereinzelungseinrichtung 14 und die Zuführeinrichtung 16 treffen sich in einem gemeinsamen Punkt (Beladepunkt), wie es nachfolgend noch näher erläutert werden wird.

Die Vereinzelungseinrichtung 14 ist (horizontal) seitlich zu einem stromabwärtigen Ende der Staustrecke 12 angeordnet. Die Zuführeinrichtung 16 ist gegenüberliegend zur Vereinzelungseinrichtung 14 ebenfalls (horizontal) seitlich zum stromabwärtigen Ende der Staustrecke 12 angeordnet.

Die Zuführeinrichtung 16 dient der vereinzelten Zuführung von sekundären Ladungsträgern 38 (z.B. Bügel 32 oder Taschen) und umfasst eine Rutsche 26, die insbesondere in Bezug auf Fig. 5 noch näher erläutert werden wird.

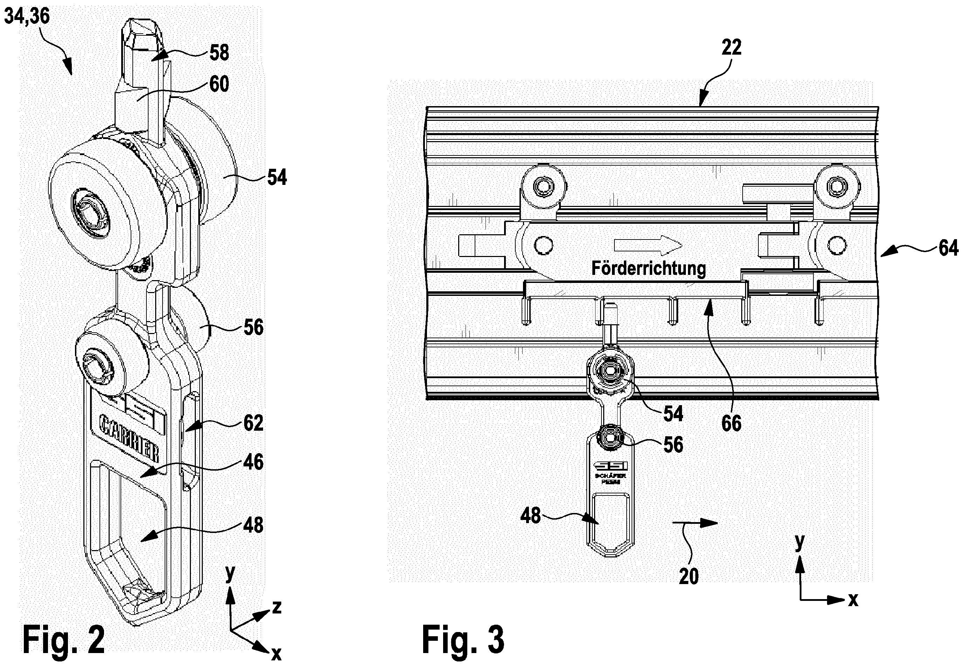

Ferner kann die Zuführeinrichtung 16 optional ein Zuführband 28 und/oder eine Zuführspindel 30 umfassen, wobei das Zuführband 28 und die Spindel 30 vorzugsweise synchronisiert zueinander betrieben werden. Das Zuführband 28 und die Spindel 30 sorgen dafür, dass die Bügel 32 mit einem gewünschten Abstand zueinander transportiert werden. Dieser Abstand wird benötigt, um die primären Ladungsträger 34 (vgl. Fig. 2), die als Rolladapter 36 oder andere Halteelemente implementiert sind, mit großer Prozesssicherheit zu beladen. Die Bügel 32 stellen exemplarisch sekundäre Ladungsträger 38 dar.

Ferner weist die Beladestation 10 eine Steuereinheit 40 auf, die über Leitungen 42 und/oder drahtlos (vgl. Doppelpfeil 44) mit den einzelnen Komponenten der Beladestation 10 verbunden ist.

Fig. 2 zeigt eine perspektivische Veranschaulichung eines primären Ladungsträgers 34, der als Rolladapter 36 implementiert ist. Der primäre Ladungsträger 34 wird in der Beladestation 10 der Fig. 1 eingesetzt. Nachfolgend wird ausschließlich der Rolladapter 36 als bevorzugte Ausführungsform des primären Ladungsträgers 34 betrachtet werden. Es versteht sich, dass der primäre Ladungsträger 34 auch durch andere Halteelemente implementiert sein kann, die in der Transportschiene 22 geführt beweglich sind.

Der Rolladapter 36 weist einen Körper 46 auf, der in seiner normalen Transportstellung im Wesentlichen entlang der vertikalen XY-Ebene orientiert ist. Natürlich weist der Körper 46 auch eine Ausnehmung in der Querrichtung Z auf. Dennoch ist der Körper 46 im Wesentlichen vertikal orientiert. Eine Längsrichtung des Körpers 46 ist parallel zur Richtung Y orientiert.

Der Körper 46 weist in einem unteren Abschnitt eine Transportöffnung 48 auf. Die Transportöffnung 48 ist eingerichtet, einen bügelförmigen Kopfabschnitt 50 (vgl. Fig. 16) des Bügels 32 (vgl. Fig. 1) aufzunehmen, indem eine Spitze 52 (vgl. Fig. 16) des zumindest teilweise offen ausgebildeten Kopfabschnitts 50 durch die Transportöffnung 48 (vgl. Fig. 2) hindurchtritt. In der normalen Transportstellung des Rolladapters 36 erstreckt sich die Transportöffnung 48 im Wesentlichen in der vertikalen XY-Ebene.

Der Rolladapter 36 weist ein erstes Paar von Laufrollen 54 und ein (optionales) zweites Paar von Stützrollen 56 auf. Die Rollen 54 und 56 sind jeweils auf einer (nicht näher bezeichneten, horizontalen) Drehachse gelagert, die sich parallel zur Querrichtung Z erstreckt. In der Querrichtung Z ist auf jeder Seite des Körpers 46 eine der Rollen 54 bzw. 56 angeordnet.

Oberhalb der Laufrollen 54 erstreckt sich ein (nicht näher bezeichneter) stegartiger Mitnehmerabschnitt des Körpers 46. Der stegartige Mitnehmerabschnitt wird aus einem Kopfsteg 58 und einem (optionalen) Mitnehmersteg 60 gebildet. Der Kopfsteg 58 erstreckt sich im Wesentlichen in der vertikalen Richtung Y, wohingegen sich der Mitnehmersteg 60 im Wesentlichen parallel zur Querrichtung Z erstreckt.

Der Rolladapter 36 kann in seinem unteren Abschnitt ferner eine Identifizierungseinrichtung 62 (z.B. einen RFID-Tag oder Ähnliches) aufnehmen oder angebracht haben, um den entsprechenden Rolladapter (ein-) eindeutig zu unterscheiden.

Fig. 3 zeigt eine Seitenansicht einer (hier nicht näher bezeichneten) Hauptförderstrecke, die wie die Staustrecke 12 in Fig. 1 eine Transportschiene 22 umfasst. In der Darstellung der Fig. 3 ist die Schiene 22 so dargestellt, dass man in ein Inneres der Schiene 22 blicken kann.

Im Inneren der Schiene 22 ist eine Antriebskette 64 des Hängeförderers 18 geführt beweglich gelagert. Die Antriebskette 64 weist hier nicht näher bezeichnete Lauf- und Stützrollen auf, um innerhalb der Schiene 22 geführt bewegt zu werden. In einem unteren Abschnitt der Antriebskette 64 sind kammartige Mitnehmerelemente 66 vorgesehen. Die Mitnehmerelemente 66 sind an die Kette 64 gekoppelt und erstrecken sich im Wesentlichen in der Längsrichtung X. Die Mitnehmerelemente 66 sind mit (hier nicht näher bezeichneten) Zinken ausgebildet, die sich im Wesentlichen in der vertikalen Richtung Y erstrecken. Diese Zinken kämmen mit dem Kopf der Rolladapter 36, um die Rolladapter 36 in der Förderrichtung 20 zu bewegen.

Die Laufrollen 54 der Rolladapter 36 sind innerhalb der Schiene 22 angeordnet, wohingegen die optionalen Stützrollen 56 außerhalb und unterhalb der Schiene 22 positioniert sind. Die Rolladapter 36 sind innenlaufend. Die Rolladapter 36 werden über ihre Laufrollen 54 auf unteren (hier nicht näher bezeichneten) Querstegen der Schiene 22 abgestützt.

Der untere Abschnitt des Rolladapters 36 ragt unten aus der Schiene 22 heraus. Insbesondere die Transportöffnung 48 ragt unten aus der Schiene 22 heraus.

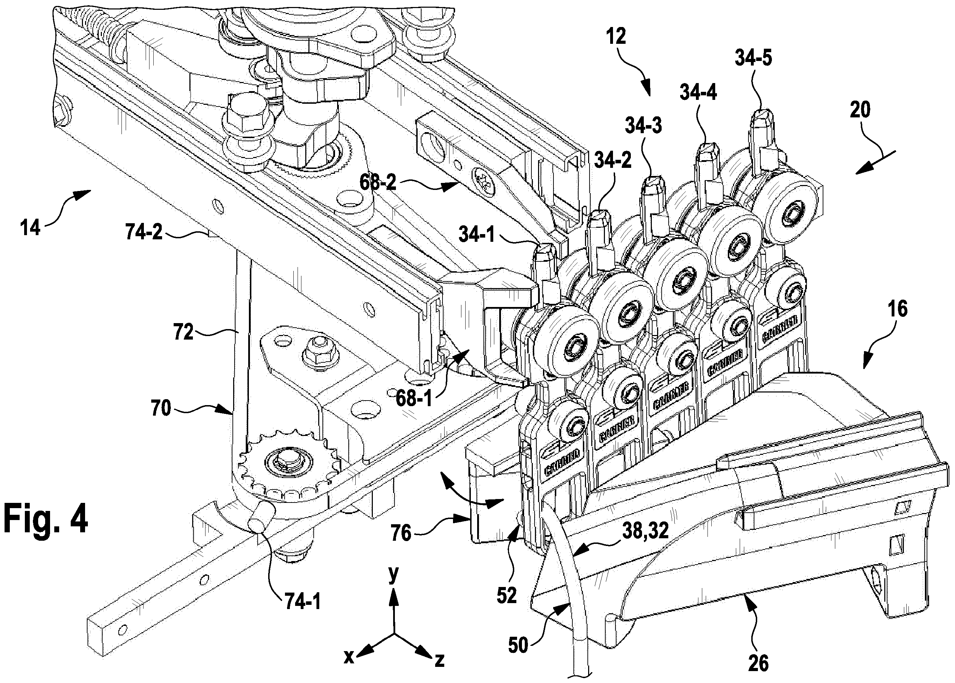

Fig. 4 zeigt eine schematische perspektivische Veranschaulichung der Beladestation 10 der Fig. 1, wobei einige Komponenten der Beladestation 10 zur Vereinfachung eines Verständnisses nicht explizit dargestellt sind.

In der Fig. 4 sind die Staustrecke 12, die Vereinzelungseinrichtung 14 und die Zuführeinrichtung 16 der Fig. 1 nur teilweise dargestellt. Ferner ist z.B. die Schiene 22 der Staustrecke 12 nicht gezeigt.

Die Staustrecke 12 ist im Wesentlichen durch aufgestaute primäre Ladungsträger 34-1 bis 34-5 angedeutet.

Die Vereinzelungseinrichtung 14 ist durch ihre ersten und zweiten Stoppelemente 68-1 und 68-2 sowie einen Förderstrang 70 angedeutet. Der Förderstrang 70 weist z.B. einen in sich geschlossenen (Antriebs-)Riemen 72 mit mindestens einem Mitnehmer 74 auf. In der Fig. 4 sind zwei Mitnehmer 74-1 und 74-2 erkennbar, die nach außen aus dem Riemen 72 (senkrecht) vorstehen. Der Förderstrang 70 ist in der horizontalen Ebene XZ angeordnet. Die Mitnehmer 74 sind eingerichtet, mit einem verjüngten Abschnitt des Körpers 46 der Rolladapter 36 zusammenzuwirken. Der (hier nicht näher bezeichnete) verjüngte Abschnitt des Körpers 46 ist vertikal zwischen den Laufrollen 54 und den Stützrollen 56 angeordnet (vgl. Fig. 2).

Die Stoppelemente 68 sind beweglich gelagert. Die Stoppelemente 68 erstrecken sich in der Querrichtung Z und sind in der Querrichtung Z z.B. entlang (hier nicht näher bezeichneten) Führungsschienen beweglich. Das erste, stromabwärts gelegene Stoppelement 68-1 ist in der Fig. 4 in einer Stoppposition gezeigt. In der Stoppposition ist das entsprechende Stoppelement 68 in einen (hier nicht näher bezeichneten) Förderweg der Rolladapter 36 hineingefahren. Dies bedeutet, dass das Stoppelement 68 in seiner Stoppposition einen Transport der Rolladapter 36 in der Förderrichtung 20 unterbindet. Das erste Stoppelement 68-1 ist in der positiven Querrichtung Z ausgefahren. Das erste Stoppelement 68 ist in einem vorderen Abschnitt klammerförmig ausgebildet.

Das zweite Stoppelement 68-2 ist in einer (zurückgezogenen) Freigabeposition in der Fig. 4 gezeigt. Auch das zweite Stoppelement 68-2 ist in der Querrichtung Z beweglich gelagert. Das zweite Stoppelement 68-2 kann in der positiven Querrichtung Z in den Förderweg der Rolladapter 36 eingefahren werden, um alle Rolladapter 36, die sich stromaufwärts zum zweiten Stoppelement 68-2 befinden, aufzuhalten, wie es nachfolgend noch näher erläutert werden wird.

Grundsätzlich können die Stoppelemente 68 fingerförmig bzw. stabförmig ausgebildet sein.

In der Stoppposition hält das Stoppelement 68-1 den primären Ladungsträger 34-1 in einer Beladeposition. In der Fig. 4 ist angedeutet, dass ein sekundärer Ladungsträger 38 in Form eines Bügels 32 in die Transportöffnung 38 bereits eingeführt ist. Die Spitze 52 des Bügels 32 berührt einen Schalter 76. Der Schalter 76 ist Teil der Vereinzelungseinrichtung 14. In der Fig. 4 ist der Schalter 76 in einer Schaltposition gezeigt. In der Schaltposition ist der Schalter 76 durch den Bügel 32 ausgelenkt, wie es durch einen Doppelpfeil angedeutet ist.

Unter Bezugnahme auf die Fig. 5 bis 9 werden nachfolgend ein Aufbau und eine Funktionsweise der Bügelzuführung bzw. Bügelbeladung näher beschrieben werden.

In Fig. 5 ist die Rutsche 26 der Zuführeinrichtung 16 der Fig. 1 isoliert dargestellt. Fig. 5 zeigt eine perspektivische Ansicht der Rutsche 26.

Eine Stirnseite 78, die in der vertikalen XY-Ebene orientiert ist, veranschaulicht einen vertikal orientierten Querschnitt durch die Rutsche 36 an einem stromabwärtigen Ende von Führungsbahnen 80-1 und 80-2, die in der Fig. 5 durch Strichlinien angedeutet sind. Die Führungsbahnen 80 stellen mögliche Kontaktpunkte zwischen dem bügelförmigen Kopfabschnitt 50 der Bügel 32 und der Rutsche 26 dar.

Die Führungsbahnen 80 können geradlinige Führungsbahnabschnitte 82-1 und 82-2 sowie parabelförmige Führungsbahnabschnitte 84-1 und 84-2 umfassen.

Die geradlinigen Abschnitte 82-1 und 82-2 sind vorzugsweise horizontal, d.h. in der XZ-Ebene orientiert. Die geradlinigen Abschnitte 82-1 und 82-2 sind vorzugsweise parallel zueinander auf unterschiedlichen Höhen angeordnet. Der obere geradlinige Abschnitt 82-1 kann durch zwei (hier nicht näher bezeichnete) Auflagestege definiert werden, wo der (hier nicht gezeigte) Kopfabschnitt 50 des (hier nicht gezeigten) Bügels 32 an zwei Orten zur Auflage kommt. Der untere geradlinige Abschnitt 82-2 dient zur Führung der (hier nicht dargestellten) Spitze 52 des Bügels 32.

Stromabwärts an die geradlinigen Abschnitte 82 schließen sich vorzugsweise parabelförmige Abschnitte 84 an. Insbesondere die parabelförmigen Abschnitte 84 liegen in schiefen Ebenen, die in der Zuführeinrichtung 24 (vgl. Fig. 1) in Richtung der Beladeposition (vgl. Fig. 4) abfallen. Der obere parabelförmige Abschnitt (84-1) dient zur Führung eines Scheitelpunkts des Kopfabschnitts 50 der Bügel 32. Der untere parabelförmige Abschnitt 84-2 dient zur Führung der Spitze 52 des Kopfabschnitts 50.

Eine (mathematische) Steigung des oberen parabelförmigen Abschnitts 84-1 ist vorzugsweise größer als eine Steigung des unteren parabelförmigen Abschnitts 84-2. Dies bedeutet, dass sich der Abschnitt 84-1 stärker in Richtung der Beladeposition (Fig. 4) in der stromabwärtigen Richtung krümmt als der Abschnitt 84-2.

Im vertikalen Querschnitt bildet der (obere) parabelförmige Abschnitt 84-1 einen Scheitelpunkt eines erhabenen (Querschnitt-)Abschnitts 86, wohingegen der untere parabelförmige Abschnitt 84-2 einen (unteren) Scheitelpunkt eines (Querschnitt-)Abschnitts 88 bildet.

Obwohl die Bügel 32 normalerweise im Wesentlichen Kontakt mit dem oberen parabelförmigen Abschnitt 84 haben, kann der untere parabelförmige Abschnitt 84-2 mit der Spitze 52 zusätzlich in Kontakt kommen, wenn der Kopfabschnitt 50 besonders groß bzw. lang dimensioniert ist.

Durch diese spezielle Geometrie wird sichergestellt, dass die Bügel 32 prozesssicher in den am weitesten stromabwärts positionierten primären Ladungsträger 34-1 (vgl. Beladeposition der Fig. 4) eingeführt werden.

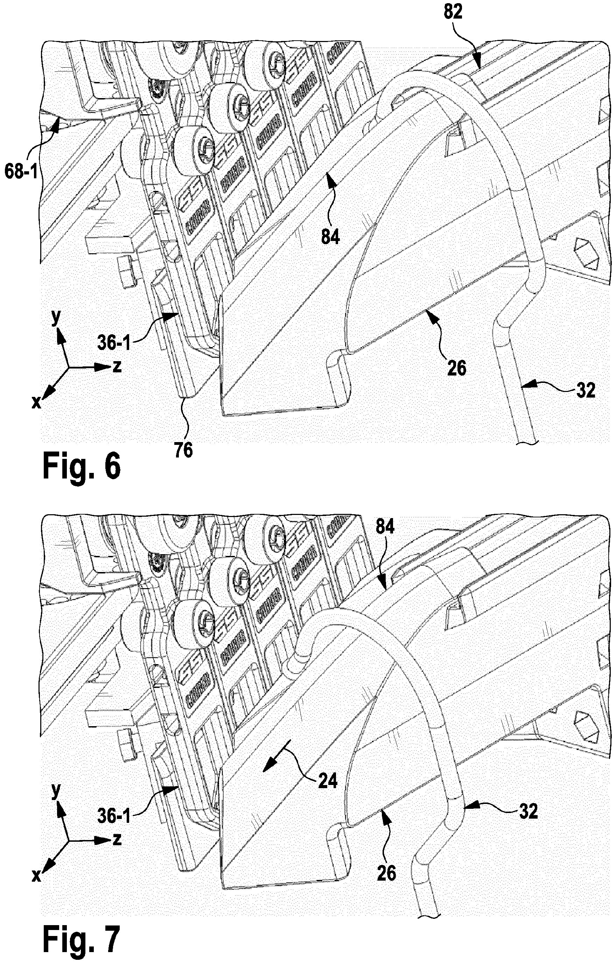

Unter Bezugnahme auf die nachfolgenden Fig. 6 bis 9 werden verschiedene Zustände einer Bügel-Beladesequenz in zeitlicher Abfolge verdeutlicht. Die Fig. 6 bis 9 zeigen perspektivische vergrößerte Ansichten der Fig. 4 mit einem Fokus auf die Bügelzuführung.

Fig. 6 zeigt einen Übergang des Bügels 32 vom geradlinigen Abschnitt 82 der Führungsbahn in den parabelförmigen Abschnitt 84. Der (leere) Rolladapter 36-1 wird durch das ausgefahrene, erste Stoppelement 68-1 in der Beladeposition gehalten.

In Fig. 7 ist der Bügel 32 bereits ein Stück abgerutscht. Die Fig. 7 zeigt einen zweiten Zustand der Bügelzuführung zu einem späteren Zeitpunkt als die Fig. 6. Der Bügel 32 bewegt sich (durch Schwerkraft) in der Zuführeinrichtung 24 entlang des parabelförmigen Abschnitts 84 der Rutsche 26.

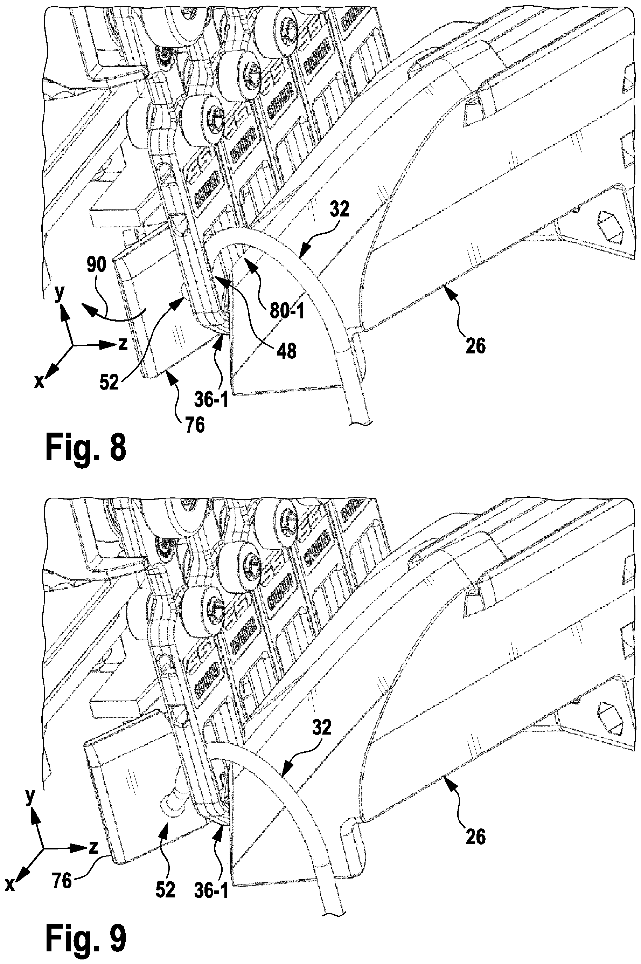

Fig. 8 zeigt den Bügel 32 in einem dritten Zustand, nachdem der Bügel 32 noch ein Stück weiter abgerutscht ist. Die Spitze 50 des Bügels 32 ist durch die Transportöffnung 48 des Rolladapters 36-1 hindurchgetreten und berührt den Schalter 76. Der Schalter 76 wird dadurch in seine Schaltstellung bewegt, insbesondere verschwenkt, wie es durch einen Pfeil 90 angedeutet ist.

Die Fig. 9 zeigt das Ende des Bügelzuführ- und Beladevorgangs, wo die Spitze 52 des Bügels 32 den Schalter 76 voll ausgelenkt hat. Der Schalter 76 befindet sich spätestens dann sicher in seiner Schaltposition. In der Schaltposition sendet der Schalter 76 ein (nicht dargestelltes) Vereinzelungssignal an die Vereinzelungseinrichtung 14 bzw. die Steuereinheit 40, um den beladenen Rolladapter 36-1 aus der Beladeposition am stromabwärtigen Ende der Staustrecke 12 abzutransportieren.

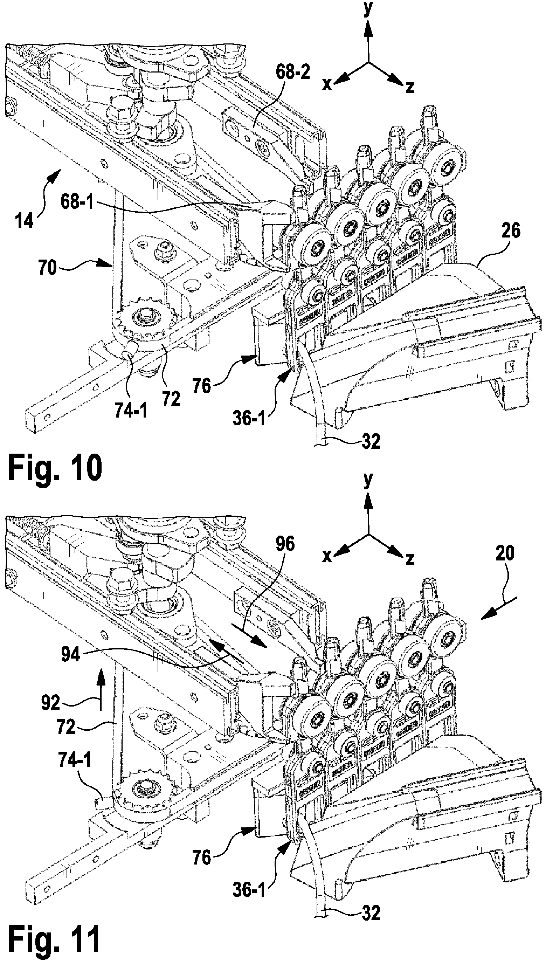

Die Vereinzelung des beladenen Rolladapters 36-1 wird nachfolgend unter Bezugnahme auf die Fig. 10 bis 15 beschrieben werden, die zeitlich hintereinander liegende Zustände eines Vereinzelungsvorgangs verdeutlichen.

Fig. 10 zeigt einen ersten Zustand eines Vereinzelungsprozesses, der durch das Vereinzelungssignal des Schalters 76, der sich in seiner Vereinzelungsstellung befindet, ausgelöst wird. Das Vereinzelungssignal wird von der Steuereinheit 40 (vgl. Fig. 1) empfangen, um die nachfolgend beschriebenen Vorgänge zu veranlassen. Die Fig. 10 entspricht der Fig. 4 und zeigt den gleichen Zustand wie die Fig. 9, jedoch in verkleinerter Darstellung. Die Fig. 10 zeigt neben der Rutsche 26 auch die Vereinzelungseinrichtung 14 mit ihrem umlaufenden Förderstrang 70, welcher exemplarisch durch einen Riemen 72 implementiert ist. In der Fig. 10 befindet sich das erste Stoppelement 68-1 in der (ausgefahrenen) Stoppstellung, wohingegen sich das zweite Stoppelement 68-2 in der (zurückgezogenen) Freigabestellung befindet. Die Fig. 10 repräsentiert den Startzeitpunkt des Vereinzelungsprozesses.

Fig. 11 zeigt einen zeitlich späteren Zustand. Der Riemen 72 wird im Uhrzeigersinn bewegt (vgl. Pfeil 92), wodurch auch die am Riemen 72 fest angebrachten Mitnehmer 74 bewegt werden. In der Fig. 11 ist lediglich einer der Mitnehmer 74 im Bereich eines Umlenkrads des Riemens 72 zu erkennen. Ein weiterer Mitnehmer 74 befindet sich in unmittelbarer Nähe zum ersten Rolladapter 36-1, um diesen in der Förderrichtung 20, d.h. parallel zur Längsrichtung X anzuschieben.

Das erste Stoppelement 68-1 wird (in der negativen Querrichtung Z) zurückgezogen (vgl. Pfeil 94), während das zweite Stoppelement 68-2 beginnt, sich in seine Stoppstellung zu bewegen, indem es in der positiven Querrichtung Z ausgefahren wird (vgl. Pfeil 96). Der beladene Rolladapter 36-1 wird aber noch immer durch das erste Stoppelement 68-1 gehalten.

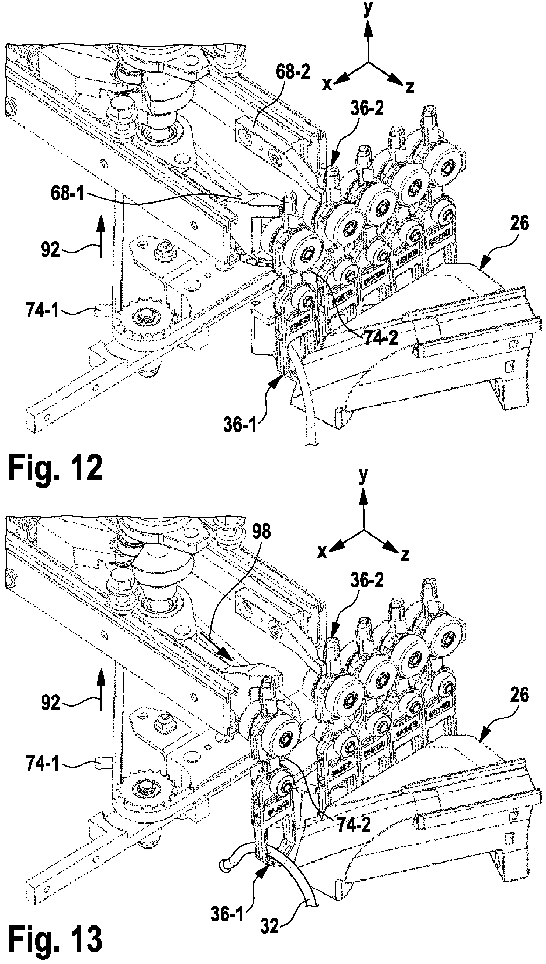

Fig. 12 zeigt den nächsten Zustand des Vereinzelungsprozesses, der zeitlich kurz hinter dem Zustand der Fig. 11 liegt. Der Riemen 72 wird weiterhin im Uhrzeigersinn bewegt (vgl. Pfeil 92). Das erste Stoppelement 68-1 ist vollständig zurückgezogen und befindet sich somit in seiner Freigabestellung, so dass der beladene Rolladapter 36-1 von dem Mitnehmer 74-2 angeschoben wird, um aus der Beladeposition heraus bewegt zu werden. Das zweite Stoppelement 68-2 ist vollständig ausgefahren und befindet sich somit in seiner Stoppstellung. Das zweite Stoppelement 68-2 hält den zweiten Rolladapter 36-1 und alle nachfolgenden fest, um ein Nachrücken des Rolladapters 36-2 in die Beladeposition zu verhindern.

Die Fig. 13 zeigt die Fig. 12 zu einem leicht späteren Zeitpunkt. Der Riemen 72 wird weiterhin, vorzugsweise kontinuierlich, im Uhrzeigersinn bewegt. Der Rolladapter 36-1 hat die Beladeposition sicher verlassen, so dass das erste Stoppelement 68-1 wieder ausgefahren werden kann (vgl. Pfeil 98).

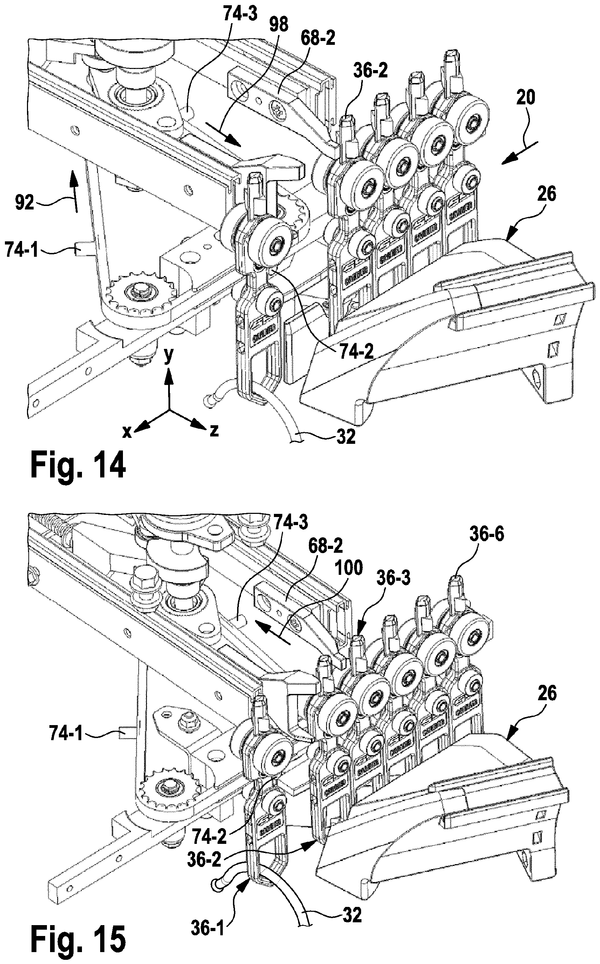

Fig. 14 zeigt die leere Beladeposition zu einem späteren Zeitpunkt als die Fig. 13. Es befindet sich kein Rolladapter 36 in der Beladeposition.

In der Fig. 14 ist das erste Stoppelement 68-1 wieder nahezu vollständig ausgefahren und befindet sich somit kurz vor seiner Stoppposition. Der Riemen 72 wird weiterhin im Uhrzeigersinn bewegt. Das zweite Stoppelement 68-2 befindet sich weiterhin in seiner Stoppposition. Der Rolladapter 36-1 wird weiterhin durch den Mitnehmer 74-2 in der Förderrichtung 20 angeschoben, um die Vereinzelungseinrichtung 14 bzw. die Beladeposition endgültig zu verlassen.

Fig. 15 zeigt die erneut bestückte Beladeposition zu einem späteren Zeitpunkt als die Fig. 14. Das erste Stoppelement 68-1 befindet sich in seiner Stoppposition, d.h. ist in der positiven Querrichtung Z vollständig ausgefahren. Während das zweite Stoppelement 68-2 zurückgezogen wird, um den Förderweg der aufgestauten Rolladapter 36-2 bis 36-6 freizugeben. Die nicht beladenen Rolladapter 36-2 bis 36-6 rücken um eine Position stromabwärts, so dass sich der Rolladapter 36-2 in der Beladeposition befindet.

Der Riemen 72 wird weiter im Uhrzeigersinn gedreht (nicht mehr gezeigt), um den Mitnehmer 74-3 in eine Position zu bringen, die der Position des Mitnehmers 74-2 in der Fig. 10 entspricht. Der Mitnehmer 74-2 befindet sich dann in der Position des Mitnehmers 74-1 in Fig. 10. Sobald sich der Mitnehmer 74-2 bzw. 74-3 in dieser Position befindet, ist der Vereinzelungszyklus abgeschlossen. Danach kann ein nächster Vereinzelungszyklus beginnen, wie es in Fig. 10 dargestellt ist.

Somit ist der Vereinzelungsprozess vollständig beschrieben.

Es versteht sich, dass je nach Länge des Riemens 42 mehr oder weniger Mitnehmer 74 in einem geeigneten Abstand zueinander außen am Riemen 32 angebracht sind. Im Beispiel der Fig. 10 bis 15 sind exemplarisch drei Mitnehmer 74-1 bis 74-3 vorgesehen.

Ein relativer Abstand der ersten und zweiten Stoppelemente 68-1 und 68-2 in der Längsrichtung X bzw. der Förderrichtung 20 ist so gewählt, dass das zweite Stoppelement 68-2 in den Förderweg des Rolladapters 36 bzw. sekundären Ladungsträgers 38 eingefahren werden kann, der direkt stromaufwärts zum Rolladapter 36 bzw. sekundären Ladungsträger 38 in der Beladeposition positioniert ist.

Ein lichter Abstand zwischen dem Schalter 76 und dem Rolladapter 36-1 in der Querrichtung Z (vgl. z.B. Fig. 6) ist so gering wie möglich gewählt, um den Vereinzelungsprozess (vgl. Fig. 10 bis 15) so schnell wie möglich zu initiieren, sobald der Bügel 32 die Transportöffnung 48 passiert hat.

Wie in den Fig. 8 und 9 gezeigt, ist die Rutsche 26 in der Querrichtung Z ebenfalls möglichst nah zum Rolladapter 36-1 in der Beladeposition angeordnet. In der Längsrichtung X bzw. der Förderrichtung 20 ist die Rutsche 26 vorzugsweise so positioniert, dass eine stromaufwärts angeordnete Seitenwand des vertieften Abschnitts 88 ungefähr auf der Höhe der stromaufwärtigen Seitenwand der Transportöffnung 48 positioniert ist. Der obere parabelförmige Abschnitt 84-1 der oberen Führungsbahn 80-1 (vgl. Fig. 5) reicht vorzugsweise über ein stromabwärtiges Ende des Rolladapters 36-1 in seiner Beladeposition hinaus (vgl. Fig. 8).

Die parabelförmige Ausgestaltung der Führungsbahnen 80-1 und 80-2 inklusive den erhabenen und vertieften Abschnitte 86 und 88 sorgen dafür, dass der Bügel 32 immer sicher durch die Transportöffnung 48 hindurchgeführt wird.

**Bezugszeichenliste**

| | | | |
|---|---|---|---|
| 10 | Beladestation | 70 | Förderstrang |
| 12 | Staustrecke | 72 | Riemen |
| 14 | Vereinzelungseinrichtung | 74 | Mitnehmer |
| 16 | Zuführeinrichtung | 76 | Schalter |
| 18 | Hängeförderer | 78 | Stirnseite von 26 |
| 20 | Förderrichtung | 80 | Führungsbahn |
| 22 | Transportschiene | 82 | Geradlinige Abschnitte von 80 |
| 24 | Zuführeinrichtung | 84 | Parabelförmige Abschnitte von 80 |
| 26 | Rutsche | 86 | Erhabener Abschnitt |
| 28 | Zuführband | 88 | Vertiefter Abschnitt |
| 30 | Zuführspindel | 90 | Schwenkbewegung |
| 32 | (Kleider-)Bügel | 92 | Riemenbewegung |
| 34 | Primärer Ladungsträger | 94 | Rückzugbewegung von 68-1 |
| 36 | Rolladapter | 96 | Ausfahrbewegung von 68-2 |
| 38 | sekundäre Ladungsträger | 98 | Ausfahrbewegung von 68-1 |
| 40 | Steuereinheit | 100 | Rückzugbewegung von 68-2 |
| 42 | Signal/Daten-Leitung | | |
| 44 | Drahtlose Kommunikation | | |
| 46 | Körper von 34 | | |
| 48 | Transportöffnung | | |
| 50 | Kopfabschnitt von 32 | | |
| 52 | Spitze von 50 | | |
| 54 | Laufrollen | | |
| 56 | Stützrollen | | |
| 58 | Kopfsteg | | |
| 60 | Mitnehmersteg | | |
| 62 | ID-Einrichtung | | |
| 64 | Antriebskette | | |
| 66 | Mitnehmerelement von 64 | | |

## Patentansprüche

1. Beladestation (10) zum automatisierten Beladen eines primären Ladungsträgers (34), vorzugsweise eines Rolladapters (36), eines Hängeförderers (18) mit einem sekundären Ladungsträger (38), vorzugsweise mit einem Bügel (32), für Hängeware, wobei der, während eines Transports im Wesentlichen vertikal orientierte, primäre Ladungsträger (34) mittels eines Paars von Laufrollen (54) innerhalb einer Transportschiene (22) des Hängeförderers (18) geführt beweglich gelagert ist, wobei die Beladestation (10) aufweist:
eine Staustrecke (12), die eingerichtet ist, eine Vielzahl der primären Ladungsträger (34), die in einer Förderrichtung (20) entlang der Staustrecke (12) bewegbar sind, entlang der Förderrichtung (20) hintereinander zu stauen;
eine Vereinzelungseinrichtung (14), die seitlich zur Staustrecke (12) angeordnet ist und die aufweist:
erste und zweite Stoppelemente (68), wobei die ersten und zweiten Stoppelemente (68) jeweils quer zur Staustrecke (12) so beweglich gelagert sind, dass jedes der Stoppelemente (68), wenn es sich in einer Stoppposition befindet, in einen Förderweg der primären Ladungsträger (34) hinein bewegt ist, um die primären Ladungsträger (34) zu stauen, und, wenn es sich in einer Freigabeposition befindet, aus dem Förderweg heraus bewegt ist, um eine Bewegung der primären Ladungsträger (34) in der Förderrichtung (20) zuzulassen; und
einen Schalter (76);
eine Steuereinheit (40); und
eine Zuführeinrichtung (16), die seitlich zur Staustrecke (12) angeordnet ist und die eingerichtet ist, einen bügelförmigen Kopfabschnitt (50) des sekundären Ladungsträgers (38) durch eine Transportöffnung (48) im primären Ladungsträger (34) zu führen, um den primären Ladungsträger (34) zu beladen, wenn sich der primäre Ladungsträger (34) in einer Beladeposition befindet, die einer stromabwärtigsten Stauposition der Staustrecke (12) entspricht, die durch die Stoppposition des ersten Stoppelements (68-1) definiert ist;
wobei der Schalter (76) gegenüberliegend zur Zuführeinrichtung (16) angeordnet ist, so dass sich der primäre Ladungsträger (34-1) in der Beladeposition zwischen dem Schalter (76) und der Zuführeinrichtung (16) befindet, wobei der Schalter (76) durch den sekundären Ladungsträger (38), vorzugsweise mittels Berührung) aus einer Normalstellung in eine Vereinzelungsstellung bewegt wird, sobald der sekundäre Ladungsträger (38) durch die Transportöffnung (48) im primären Ladungsträgers (34) hindurchgetreten ist, und ein Vereinzelungssignal an die Steuereinheit (40) sendet; und
wobei die Steuereinheit (40), wenn die Steuereinheit (40) das Vereinzelungssignal empfängt, veranlasst, dass der beladene primäre Ladungsträger (34-1) die Beladeposition in der Förderrichtung (20) verlässt.

2. Beladestation (10) nach Anspruch 1, wobei der primäre Ladungsträger (34-1) in der Beladeposition und entlang der Staustrecke (12) im Wesentlichen vertikal orientiert ist.

3. Beladestation (10) nach Anspruch 1 oder 2, wobei die Zuführeinrichtung (16) eine Rutsche (26) aufweist, die eine schiefe Ebene definiert, die in Richtung der Beladeposition abfällt und entlang welcher der sekundäre Ladungsträger (38) in die Transportöffnung (48) des primären Ladungsträgers (34-1) gleitet, der sich in der Beladeposition befindet.

4. Beladestation (10) nach Anspruch 3, wobei ein vertikal orientierter Querschnitt der Rutsche (26) einen erhabenen Abschnitt (86), auf dem ein Scheitelpunkt des bügelförmigen Kopfabschnitts (50) in Richtung der Beladeposition gleitet, und einen angrenzenden, vertieften Abschnitt (88) aufweist, der eingerichtet ist, eine Spitze (52) des bügelförmigen Kopfabschnitts (50) in Richtung der Beladeposition zu führen.

5. Beladestation (10) nach Anspruch 4, wobei der erhabene Abschnitt (88) und der vertiefte Abschnitt (86) in einer Draufsicht auf die Rutsche (26) parabelförmige Führungsbahnabschnitte (84) definieren, die von geradlinigen parallelen Führungsbahnabschnitten (82) startend in die Beladeposition münden, und wobei vorzugsweise der parabelförmige Führungsbahnabschnitt (84-1) des erhabenen Abschnitts (86) eine größere Steigung als der parabelförmige Führungsbahnabschnitt (84-2) des vertieften Abschnitts (88) aufweist.

6. Beladestation (10) nach einem der Ansprüche 1 bis 5, wobei der Schritt, gemäß dem die Steuereinheit (40) veranlasst, dass der beladene primäre Ladungsträger (34-1) die Beladeposition verlässt, erfolgt, indem das erste Stoppelement (68-1) aus der Stoppposition in die Freigabeposition bewegt wird, während das zweite Stoppelement (68-2) aus der Freigabeposition in die Stoppposition bewegt wird, so dass der beladene primäre Ladungsträger (34-1) die Beladeposition verlässt, während alle anderen primären Ladungsträger (34-2, 34-3, 34-4, 34-5), die sich stromaufwärts zur Beladeposition befinden, durch das zweite Stoppelement (68-2) aufgehalten werden.

7. Beladestation (10) nach einem der Ansprüche 1 bis 6, wobei die Vereinzelungseinrichtung (14) ferner einen umlaufenden, in sich geschlossenen Förderstrang (70) aufweist, der mindestens einen nach außen vorstehenden Mitnehmer (74) aufweist, wobei der Förderstrang (70) so angeordnet ist, dass der mindestens eine Mitnehmer (74) von den aufgestauten primären Ladungsträgern (34) nur den primären Ladungsträger (34-1) in der Beladeposition berührt und anschließend parallel zur Förderrichtung (20) anschiebt.

8. Beladestation (10) nach Anspruch 7, wobei der Förderstrang (70) getaktet bewegt wird, insbesondere wenn der Förderstrang (70) mehrere Mitnehmer (74) aufweist, wobei die Mitnehmer (74) entlang des Förderstrangs (70) gleich beabstandet angeordnet sind und wobei ein Takt durch den Abstand zwischen benachbarten Mitnehmern (74) definiert ist.

9. Beladestation (10) nach einem der Ansprüche 1 bis 8, wobei ein relativer Abstand des ersten und zweiten Stoppelements (68) in der Förderrichtung (20) kleiner als ein Abstand zwischen zwei aufgestauten primären Ladungsträgern (34) ist.

10. Beladestation (10) nach einem der Ansprüche 1 bis 9, wobei der Schalter (76) ein Kontaktschalter oder eine Schaltwippe ist, der bzw. die nach einer Auslenkung durch den sekundären Ladungsträger (38) und nach einem Abtransport des beladenen primären Ladungsträgers (34-1) aus der Beladeposition selbsttätig in die Normalposition zurückkehrt.

11. Hängeförderer (18) mit einer Beladestation (10) nach einem der Ansprüche 1 bis 10.

## Claims

1. A loading station (10) for automatically loading a primary load carrier (34), preferably a rolling adapter (36), of an overhead conveyor (18) with a secondary load carrier (38), preferably with a hanger (32), for hanging goods, wherein the primary load carrier (34), which is substantially oriented vertical during transport, is supported movable in a guided manner by means of a pair of travelling rollers (54) within a transport rail (22) of the overhead conveyor (18), wherein the loading station (10) comprises:
an accumulation line (12) configured to accumulate a plurality of primary load carriers (34), which are movable in a conveying direction (20) along the accumulation line (12), along the conveying direction (20) one behind the other;
a separating device (14), which is arranged laterally to the accumulation line (12), comprising:
first and second stopping elements (68), wherein the first and second stopping elements (68) are respectively supported in a movable manner transversally to the accumulation line (12) so that each of the stopping elements (68), when being located in a stopping position, is moved into a conveying path of the primary load carriers (34) for accumulating the primary load carriers (34), and, when being located in a release position, is moved out of the conveying path for allowing movement of the primary load carriers (34) in the conveying direction (20); and
a switch (76);
a control unit (40); and
a feeding device (16) arranged laterally to the accumulation line (12), and configured to guide a hanger-shaped head portion (50) of the secondary load carrier (38) through a transport opening (48) in the primary load carrier (34) for loading the primary load carrier (34) when the primary load carrier (34) is located in a loading position corresponding to a downstream accumulation position of the accumulation line (12) defined by the stopping position of the first stopping element (68-1);
wherein the switch (76) is arranged oppositely to the feeding device (16) so that the primary load carrier (34-1) in the loading position is located between the switch (76) and the feeding device (16), wherein the switch (76) is moved by the secondary load carrier (38), preferably by means of contact, from a normal position into a separating position as soon as the secondary load carrier (38) has passed through the transport opening (48) in the primary load carrier (34), and transmits a separating signal to the control unit (40); and
wherein the control unit (40) causes, when the control unit (40) receives the separating signal, the loaded primary load carrier (34-1) to exit the loading position in the conveying direction (20).

2. The loading station (10) of claim 1, wherein the primary load carrier (34-1) is oriented substantially vertical in the loading position and along the accumulation line (12).

3. The loading station (10) of claim 1 or 2, wherein the feeding device (16) comprises a chute (26) defining an inclined plane declining towards the loading position and along which the secondary load carrier (38) slides into the transport opening (48) of the primary load carrier (34-1) located in the loading position.

4. The loading station (10) of claim 3, wherein a vertically oriented cross section of the chute (26) comprises an embossed portion (86), on which an apex of the hanger-shaped head section (50) slides towards the loading position, and an adjacent recessed portion (88) configured to guide a tip (52) of the hanger-shaped head portion (50) towards the loading position.

5. The loading station (10) of claim 4, wherein the embossed portion (88) and the recessed portion (86) define, in a top view of the chute (26), parabolic guiding-track sections (84) leading into the loading position starting from straight parallel guiding-track sections (82), and wherein preferably the parabolic guiding-track portion (84-1) of the embossed portion (86) has a greater slope than the parabolic guiding-track portion (84-2) of the recessed portion (86).

6. The loading station (10) of any of claims 1 to 5, wherein the step, according to which the control unit (40) causes the loaded primary load carrier (34-1) to exit the loading position, is conducted by moving the first stopping element (68-1) from the stopping position into the release position while the second stopping element (68-2) is moved from the release position into the stopping position so that the loaded primary load carrier (34-1) exits the loading position while all other primary load carriers (34-2, 34-3, 34-4, 34-5), which are located downstream to the loading position, are held by the second stopping element (68-2).

7. The loading station (10) of any of claims 1 to 6, wherein the separating device (14) further comprises a closed circulating conveying string (70), which comprises at least one driver (74) projecting out, wherein the conveying string (70) is arranged such that the at least one driver (74) contacts only the primary load carrier (34-1) in the loading position of the accumulated primary load carriers (34), and subsequently pushes the same parallel to the conveying direction (20).

8. The loading station (10) of claim 7, wherein the conveying string (70) is moved in a clocked manner, in particular when the conveying string (70) comprises several drivers (74), wherein the drivers (74) are arranged at equal distances along the conveying string (70), and wherein a cycle is defined by the distance between adjacent drivers (74).

9. The loading station (10) of any of claims 1 to 8, wherein a relative distance of the first and second stopping elements (68) in the conveying direction (20) is less than a distance between two accumulated primary load carriers (34).

10. The loading station (10) of any of claims 1 to 9, wherein the switch (76) is a contact switch, or a switching rocker, returning automatically into normal position after deflection by the secondary load carrier (38) and after transporting away the loaded primary load carrier (34-1) from the loading position.

11. An overhead conveyor (18) comprising a loading station (10) of any of claims 1 to 10.

## Revendications

1. Station de chargement (10) pour le chargement automatisé d'un support de charge primaire (34), de préférence d'un adaptateur roulant (36), d'un convoyeur suspendu (18) avec un support de charge secondaire (38), de préférence avec un cintre (32), pour des marchandises suspendues, dans laquelle le support de charge primaire (34), orienté essentiellement verticalement pendant un transport, est monté de manière mobile guidée au moyen d'une paire de galets de roulement (54) à l'intérieur d'un rail de transport (22) du convoyeur suspendu (18), la station de chargement (10) présentant :
un segment d'accumulation (12), qui est adapté pour accumuler une pluralité des supports de charge primaires (34), qui peuvent se déplacer dans une direction d'acheminement (20) le long du segment d'accumulation (12), les uns derrière les autres le long de la direction d'acheminement (20) ;
un appareil de séparation (14), qui est agencé latéralement par rapport au segment d'accumulation (12) et qui présente :
des premier et deuxième éléments d'arrêt (68), les premier et deuxième éléments d'arrêt (68) étant chacun montés de manière mobile transversalement par rapport au segment d'accumulation (12), de telle sorte que chacun des éléments d'arrêt (68), lorsqu'il se trouve dans une position d'arrêt, est déplacé dans un trajet d'acheminement des supports de charge primaires (34), pour accumuler les supports de charge primaires (34) et, lorsqu'il se trouve dans une position de libération, est déplacé hors du trajet d'acheminement pour permettre un déplacement des supports de charge primaires (34) dans la direction d'acheminement (20) ; et
un commutateur (76) ;
une unité de commande (40) ; et
un appareil d'amenée (16), qui est agencé latéralement par rapport au segment d'accumulation (12) et qui est adapté pour guider une section de tête en forme d'arceau (50) du support de charge secondaire (38) à travers une ouverture de transport (48) dans le support de charge primaire (34), afin de charger le support de charge primaire (34) lorsque le support de charge primaire (34) se trouve dans une position de chargement, qui correspond à une position d'accumulation la plus en aval du segment d'accumulation (12), qui est définie par la position d'arrêt du premier élément d'arrêt (68-1) ;
dans laquelle le commutateur (76) est agencé à l'opposé de l'appareil d'amenée (16), de telle sorte que le support de charge primaire (34-1) se trouve dans la position de chargement entre le commutateur (76) et l'appareil d'amenée (16), dans laquelle le commutateur (76) est déplacé par le support de charge secondaire (38), de préférence par contact, d'une position normale à une position de séparation, dès que le support de charge secondaire (38) a traversé l'ouverture de transport (48) dans le support de charge primaire (34), et envoie un signal de séparation à l'unité de commande (40) ; et
dans laquelle, lorsque l'unité de commande (40) reçoit le signal de séparation, l'unité de commande (40) amène le support de charge primaire chargé (34-1) à quitter la position de chargement dans la direction d'acheminement (20).

2. Station de chargement (10) selon la revendication 1, dans laquelle le support de charge primaire (34-1) est orienté essentiellement verticalement dans la position de chargement et le long du segment d'accumulation (12).

3. Station de chargement (10) selon la revendication 1 ou 2, dans laquelle l'appareil d'amenée (16) présente une goulotte (26), qui définit un plan incliné, qui descend dans la direction de la position de chargement et le long duquel le support de charge secondaire (38) glisse dans l'ouverture de transport (48) du support de charge primaire (34-1) qui se trouve dans la position de chargement.

4. Station de chargement (10) selon la revendication 3, dans laquelle une section transversale orientée verticalement de la goulotte (26) présente une section en relief (86), sur laquelle un sommet de la section de tête en forme d'arceau (50) glisse dans la direction de la position de chargement, et une section en creux adjacente (88), qui est adaptée pour guider une pointe (52) de la section de tête en forme d'arceau (50) dans la direction de la position de chargement.

5. Station de chargement (10) selon la revendication 4, dans laquelle la section en relief (88) et la section en creux (86) définissent, dans une vue de dessus de la goulotte (26), des sections de voie de guidage paraboliques (84), qui débouchent dans la position de chargement en partant de sections de voie de guidage parallèles rectilignes (82), et dans laquelle, de préférence, la section de voie de guidage parabolique (84-1) de la section en relief (86) présente une pente plus grande que la section de voie de guidage parabolique (84-2) de la section en creux (88).

6. Station de chargement (10) selon l'une quelconque des revendications 1 à 5, dans laquelle l'étape selon laquelle l'unité de commande (40) amène le support de charge primaire chargé (34-1) à quitter la position de chargement est effectuée en déplaçant le premier élément d'arrêt (68-1) de la position d'arrêt à la position de libération, tandis que le deuxième élément d'arrêt (68-2) est déplacé de la position de libération à la position d'arrêt, de telle sorte que le support de charge primaire chargé (34-1) quitte la position de chargement, tandis que tous les autres supports de charge primaires (34-2, 34-3, 34-4, 34-5), qui se trouvent en amont de la position de chargement, sont retenus par le deuxième élément d'arrêt (68-2).

7. Station de chargement (10) selon l'une quelconque des revendications 1 à 6, dans laquelle l'appareil de séparation (14) présente en outre une ligne d'acheminement (70) périphérique, fermée sur elle-même, qui présente au moins un entraîneur (74) faisant saillie vers l'extérieur, la ligne d'acheminement (70) étant agencée de telle sorte que l'au moins un entraîneur (74) ne vient en contact qu'avec le support de charge primaire (34-1) dans la position de chargement parmi les supports de charge primaires accumulés (34) et le pousse ensuite parallèlement à la direction d'acheminement (20).

8. Station de chargement (10) selon la revendication 7, dans laquelle la ligne d'acheminement (70) est déplacée de manière cadencée, notamment lorsque la ligne d'acheminement (70) présente plusieurs entraîneurs (74), dans laquelle les entraîneurs (74) sont agencés à un écart égal le long de la ligne d'acheminement (70) et dans laquelle une cadence est définie par l'écart entre des entraîneurs (74) voisins.

9. Station de chargement (10) selon l'une quelconque des revendications 1 à 8, dans laquelle un écart relatif des premier et deuxième éléments d'arrêt (68) dans la direction d'acheminement (20) est inférieur à un écart entre deux supports de charge primaires accumulés (34).

10. Station de chargement (10) selon l'une quelconque des revendications 1 à 9, dans laquelle le commutateur (76) est un commutateur à contact ou une bascule de commutation, qui revient automatiquement de la position de chargement à la position normale après une déviation par le support de charge secondaire (38) et après une évacuation du support de charge primaire chargé (34-1).

11. Convoyeur suspendu (18) comprenant une station de chargement (10) selon l'une quelconque des revendications 1 à 10.
